# EUROPEAN PATENT APPLICATION

(11) **EP 1 401 081 A2**
(43) Date of publication of application: **24.03.2004**
(21) Application number: 03021033.0
(22) Date of filing: 17.09.2003
(51) Int. Cl.: H02J 7/14

(54) **Intelligent automotive voltage regulation system**

(30) Priority: 17.09.2002 US 411591 P
(71) Applicant: INTERNATIONAL RECTIFIER CORPORATION, El Segundo, CA 90245 (US)
(72) Inventor: Renehan, John, c/o International Rectifier Corp., El Segundo, CA 90245 (US); Gibat, Thomas, c/o International Rectifier Corp., El Segundo, CA 90245 (US); Sommerfeld, Peter, c/o Intern. Rectifier Corp., El Segundo, CA 90245 (US)
(74) Representative: Feldkamp, Rainer, Dipl.-Ing.

(57) **Abstract**

An intelligent charging system (10) for an engine is disclosed that provides bi-directional information flow between a voltage regulator (2) and a powertrain control module (PCM). The powertrain control module establishes a voltage regulator setpoint by transmitting to the regulator a predetermined duty cycle and receiving from the regulator a field driver transistor duty cycle. The present invention increases battery life and, further, allows the powertrain control module to dynamically control generator output based on real-time load activity.

## Description

### CROSS-REFERENCE TO RELATED APPLICATiON

The present invention is based on and claims priority to U.S. Provisional Patent Application Serial Number 60/411,591, filed on September 17, 2002 and entitled "AUTOMOTIVE POWER SCHEMES-CHARGING WITH INTELLIGENCE," the entire contents of which are incorporated by reference.

### FIELD OF THE INVENTION

The present invention is directed to improving automotive systems, including prolonging battery life, idle stability and engine performance, and, more particularly, to communication between a voltage regulator use to control generator output and a powertrain control module or engine control unit.

### BACKGROUND OF THE INVENTION

The rapid growth in the electronic content of vehicles is driving the trend for generators with higher and higher outputs and increased engine torque load. The increased loads significantly impact powertrain performance. Accordingly, there is an increased focus on the integration of the generator into the network of systems that are essential to the modem vehicle.

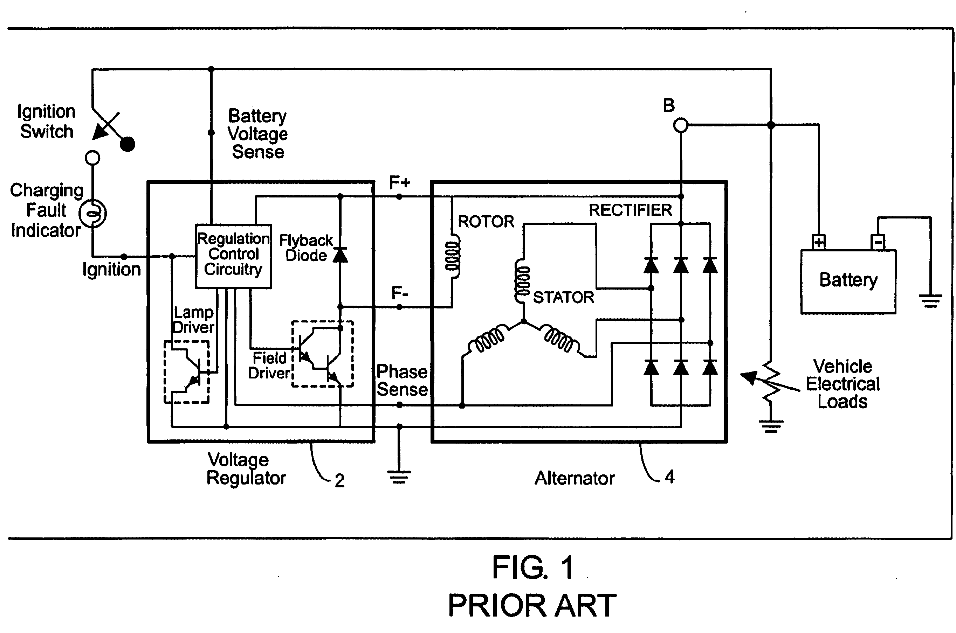

Referring to the drawings in which like reference numerals refer to like elements, there is shown in Figure 1 an example of a prior art automobile charging system. As shown in Figure 1, a voltage regulator 2 modulates the field current of the alternator 4 in order to control alternator output current. The charging system shown in Figure 1 is a closed loop system in which field current modulation is determined by the difference between an internal set point of voltage regulator 2 and an actual voltage of the respective vehicle's electrical system. In operation, when system voltage falls, the voltage regulator 2 increases the field current to raise output current from the alternator 4 and restore system voltage. When the system voltage rises, for example, as a result of loads being switched off, field current is reduced. The voltage regulator 2 generally operates in proportional control mode, unless a significant change in voltage is detected. In the example shown in Figure 1, the setpoint is initially adjusted to the actual voltage and then ramps up to the voltage regulator's 2 internal setpoint. Known in the art as "Load Response Control," this function prevents the occurrence of overvoltage and undervoltage conditions.

In a prior art charging system such as shown in Figure 1, the internal set point of voltage regulator 2 is dependant on a baseplate temperature of the voltage regulator 2 and, in general, will have a linear negative temperature coefficient. However, in some applications, in order to ensure that the battery is charged carefully at any given temperature, this temperature compensation can form a curve that is flattened at hot and cold temperatures.

The intent is to ensure that the battery is charged appropriately at any given temperature, and, accordingly, the voltage regulator baseplate is actually used as the reference for battery temperature. In reality, however, these two temperatures can differ, which in turn can lead to charging regimen that are detrimental to battery lifc.

The limitations of conventional closed loop control systems are forcing designers to investigate alternative charging systems. For example, in the last ten years or so some manufacturers have implemented open loop connections between the voltage regulator and the powertrain control module ("PCM"), in which the regulator reports generator load status. This ties together the two important systems of vehicle energy distribution, namely distribution of mechanical energy from the engine which is under the control of the powertrain control module "PCM", and distribution of the electrical energy from the generator controlled by the voltage regulator 2. However, this type of system still has limitations.

### SUMMARY OF THE INVENTION

There is a need, therefore, for an intelligent charging system that provides bi-directional information flow between the voltage regulator 2 and the powertrain control module. The present invention addresses the battery charging issue outlined above, and, further, allows the PCM to dynamically control generator output based on real-time load activity.

In accordance with the present invention, a voltage regulation system for an engine is provided including a voltage regulator, an alternator and a powertrain control module, and a communication module that provides a bi-directional flow of information between the voltage regulator and the powertrain control module. The powertrain control module determines a voltage setpoint by transmitting to the regulator a predetermined duty cycle, and receiving from the voltage regulator a field driver transistor duty cycle, wherein the powertrain control module receives alternator output information representing output from the alternator, and directs the voltage regulator to adjust revolutions per minute of the engine after a comparison of the alternator output information with the voltage setpoint indicates that revolutions per minute ofthe engine requires adjustment.

A study has been made of analogue and digital communication technologies in order to allow designers to reap the benefits of intelligent charging systems. Communication between the powertrain control module and the generator regulator is a growing area of importance for vehicle designers.

A vital element of this integration is the communication between the voltage regulator used to control generator output and the powertrain control module or engine control unit ("ECU").

By providing bi-directional information flow between the voltage regulator and PCM, using the latest technologies, designers are able to implement intelligent charging systems that deliver benefits such as improved battery life, idle stability, engine performance, generator and engine reliability and improved transient behavior.

### BRIEF DESCRIPTION OF THE DRAWINGS

The present invention is described in greater detail below, with reference to the accompanying drawings, in which:

Figure 1 is a diagram of an example of a prior art automobile charging system;

Figure 2 shows a regulation system based on analogue communication in which a fixed frequency, pulse width modulation signal is used for communication between the powertrain converter module in accordance with the present invention; and

Figure 3 shows a regulation system based on digital communication and based on the Local Interconnect Network protocol in which a fixed frequency, pulse width modulation signal is used for communication between the powertrain control module and voltage regulator, in accordance with the present invention.

### DETAILED DESCRIPTION OF EMBODIMENTS OF THE INVENTION

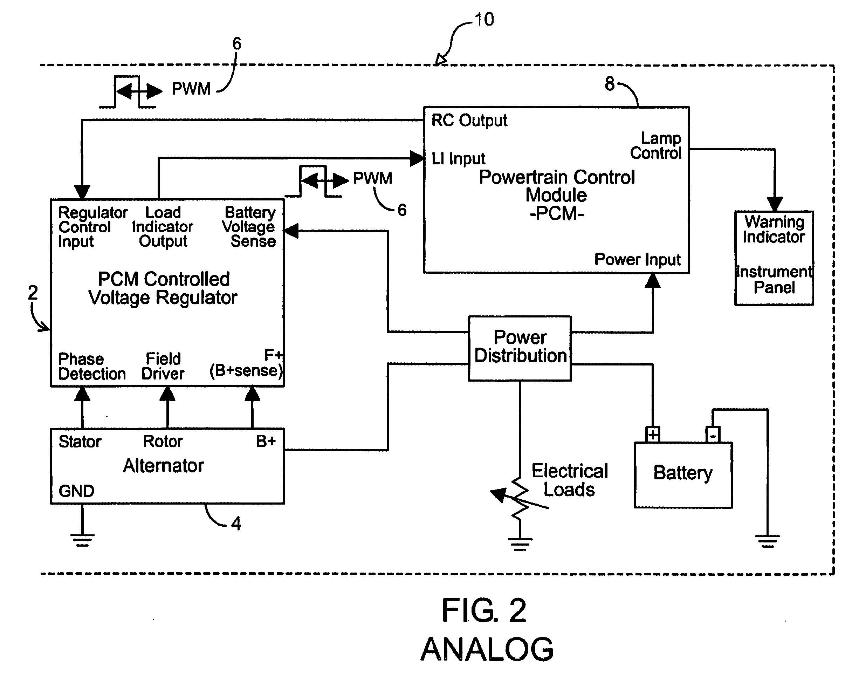

The present invention is directed, generally, to information flow that is based on either analogue or digital communications. Figure 2 illustrates an example of a voltage regulation system constructed in accordance with the present invention and designated generally as intelligent charging system 10. The embodiment shown in Figure 2 is based on an analog communication in which a fixed frequency pulse width modulation ("PWM") signal 6 is used for communication between the powertrain control module ("PCM") 8 and the voltage regulator 2. The PCM 8 preferably determines a system voltage setpoint by transmitting a specific duty cycle, while the voltage regulator 2 transmits back the field driver transistor duty cycle.

One advantage provided by the intelligent charging system 10 over prior art closed and/or open loop solutions is that the alternator 4 influences engine stability at idle, which leads to improved vehicle fuel consumption. Typically, when output from the alternator 4 changes rapidly, the change in corresponding torque load on the engine causes the engine idle speed to change. In a conventional system such change in alternator output occurs too quickly for the PCM 8 to react. Since the time constant of the engine is much greater than that of the alternator 4, throttle control cannot be adjusted in time to affect the engine idle speed.

In accordance with the present invention, the PCM 8 is aware of the alternator's 4 load status, and the PCM 8 can calculate the corresponding load torque. As a result, the PCM 8 uses this information to properly manage the torque variation such that idle can be set at a lower speed than would be possible in a conventional system. Furthermore, The intelligent charging system 10 allows the PCM 8 to address a condition of insufficient alternator 4 output at idle by slowly increasing the engine revolutions per minute ("RPM"), so as to increase output. This has the effect of stabilizing system voltage, and helps to prevent battery drain. Additionally, the PCM 8 can identify sudden power peaks during idle and, again, increase engine RPM to prevent battery drain.

The intelligent charging system 10 also helps to improve engine performance at high RPM, for example, when the throttle is fully open. In this case, the PCM 8 preferably reduces the alternators 4 mechanical loading so as to give the engine the maximum possible power. In this case the setpoint of the voltage regulator 2 is reduced by the PCM 8, which, in turn, reduces the alternator 4 output and, thus, reduces the mechanical load on the engine. In addition to improving acceleration times, such functionality can also be used during engine start to reduce battery drain.

The intelligent charging system 10, for example, as illustrated in Figure 2 increases battery lifetime by allowing the PCM 8 to determine the temperature dependence of the voltage regulator setpoint. This is a much better approach than using the voltage regulator baseplate temperature as a reference for battery temperature since, in accordance with the present invention, the PCM 8 has the inputs for calculating battery temperature more accurately.

Furthermore, in addition to reporting the load status of the alternator 8, the voltage regulator 2 in accordance with the intelligent charging system 10 can be used to provide diagnostic feedback to the PCM 8 both for electrical and mechanical failures. Such failures include loss of alternator output and loss of electrical contact with the alternator and, naturally, disruption of communication between the PCM 8 and voltage regulator 2. Other conditions that can be identified by the PCM 8 include open and short circuits on the rotor or stator windings, system overvoltage resulting from a shorted field driver, field driver open circuits, and diode failure on the rectifier. In these cases, the information can be used by the PCM 8 to identify appropriate corrective action or, alternatively, highlight the fault condition to the vehicle driver.

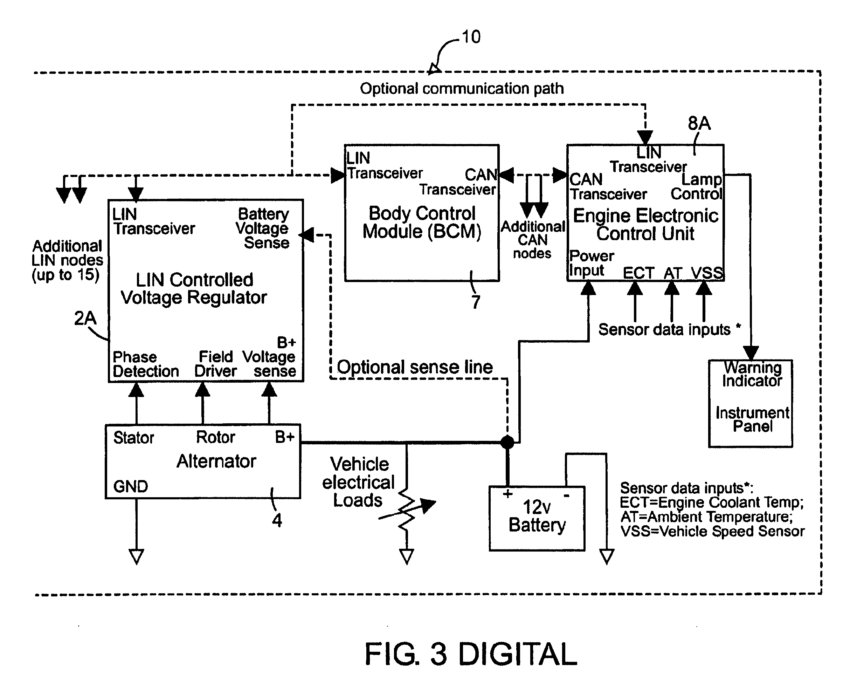

In addition to an intelligent charging system 10 based on analog communication (as shown in Figure 2), the present invention is also implemented using digital communication, as illustrated in the example shown in Figure 3. The embodiment shown in Figure 3 uses digital bus communication, and utilizes the Local Interconnect Network ("LIN") protocol. The LIN protocol has been introduced in prior art automotive systems, specifically with respect to devices located in the passenger compartment that require significantly less time-critical applications, such as door locks and seat adjustment devices. Unlike prior art systems, however, the intelligent charging system 10 applies the protocol to a generator voltage regulator 2A in an automotive system. The LIN protocol is used in accordance with the present invention and enables the voltage regulator 2A to react in a fraction of a second to ensure that functions such as load response control or overvoltage protection operate appropriately.

The system shown in Fig. 3 has LIN controlled regulator 2A, alternator 4, a body control module (BCM) 7, FCU 8A, in addition to the storage battery and instrument panel.

The present invention uses hybrid thick-film technology to develop PCM-controlled voltage regulators with built-in analogue PWM communications capability. These hybrid devices combine a "flip-chip" ASIC with a field driver, a power transistor for controlling the alternator's field excitation current, and a flyback diode. The ASIC provides the central voltage regulator functionality, the communication interfaces and the drivers for the discrete power devices. Discrete chip capacitors are used to integrate the necessary EMC filters.

Thus, the present invention provides significant advantages over prior art automotive power schemes. By providing communication, as described herein, between the PCM 8 and generator voltage regulator 2, powertrain performance is significantly improved thereby providing for improvements in battery life, fuel consumption, and engine performance.

## Claims

1. A voltage regulation system for an engine electrical system, the voltage regulation system comprising:
a voltage regulator, an alternator and a powertrain control module; and
the voltage regulator and power train control module being coupled for communication comprising a bi-directional flow of information between the voltage regulator and the powertrain control module, the powertrain control module determining a voltage regulator setpoint by transmitting to the voltage regulator data representing a predetermined regulator set point and receiving from the voltage regulator data representing the regulator set point, and wherein the power train control module receives alternator output information to control the set point.

2. The voltage regulation system of claim 1, wherein the powertrain control module receives alternator output information representing output from the alternator, and directs the voltage regulator to adjust engine speed after a comparison of the alternator output information with the voltage regulator setpoint indicates the engine speed requires adjustment.

3. The voltage regulation system of claim 1, wherein the data transmitted by the power train control module to the voltage regulator representing a predetermined regulator set point comprises a predetermined duty cycle of a pulse width modulated signal, and the data transmitted by the voltage regulator to the power train control module representing the regulator set point comprises a field driver transistor duty cycle.

4. The voltage regulation system of claim 1, wherein the communication between the voltage regulator and the power train control module comprises pulse width modulation.

5. The voltage regulation system of claim 1, wherein the alternator output information represents alternator output voltage.

6. The voltage regulation system of claim 5, wherein the powertrain control module directs the voltage regulator to increase voltage in response to a drop in voltage, and to decrease voltage in response to a voltage peak.

7. The voltage regulation system of claim 1, wherein the communication comprises analog communication.

8. The voltage regulator system of claim 1, wherein the communication comprises digital communication.

9. The voltage regulation system of claim 8, further comprising the Local Interconnect Network protocol for providing digital communication.

10. The voltage regulation system of claim 1, wherein the powertrain control module dynamically controls alternator output levels in real time based upon actual load activity.

11. The voltage regulation system of claim 1, wherein the alternator further receives fault condition information directed to at least one of an open circuit on a rotor, a short circuit on a rotor, a system overvoltage resulting from a shorted field river, and a diode failure on a rectifier.

12. The voltage regulation system of claim 11, wherein the powertrain control module provides electronic notification of the fault condition information.

13. The voltage regulation system of claim 11, wherein the powertrain control module takes corrective action in response to receiving the fault condition information.

14. A method of regulating voltage in an engine electrical system, the method comprising:
providing a bi-directional flow of information between a voltage regulator and a powertrain control module, the powertrain control module determining a voltage regulator setpoint by transmitting to the regulator data representing a predetermined regulator set point and receiving from the voltage regulator data representing the regulator set point; and
providing alternator output information representing output from the alternator to the powertrain control module, whereby the powertrain control module can adjust the set point.

15. The method of claim 14, wherein the powertrain control module directs the voltage regulator to adjust engine speed after comparing the alternator output information with the voltage regulator setpoint and determining that the engine speed should be adjusted.

16. The method of claim 14, wherein the data transmitted by the powertrain control module to the voltage regulator representing a predetermined regulator setpoint comprises a predetermined duty cycle of a pulse width modulated signal, and the data transmitted by the voltage regulator to the powertrain control module representing the regulator setpoint comprises a field driver transistor duty cycle.

17. The method of claim 14, wherein the information is provided as at least . one pulse width modulation signal.

18. The method of claim 14, wherein the alternator output information represents alternator output voltage.

19. The method of claim 18, wherein the powertrain control module directs the voltage regulator to increase voltage in response to a drop in voltage, and to decrease voltage in response to a voltage peak.

20. The method of claim 14, wherein the communication between the voltage regulator and powertrain control module is an analog.

21. The method of claim 14, wherein the communication between the voltage regulator and the powertrain control module is digital.

22. The method of claim 20, further comprising using the Local Interconnect Network protocol for providing digital communication.

23. The method of claim 14, wherein the powertrain control module dynamically controls alternator output levels in real time based upon actual load activity.

24. The method of claim 14, wherein the alternator further receives fault condition information directed to at least one of an open circuit on a rotor, a short circuit on a rotor, a system overvoltage resulting from a shortened field driver, and a diode failure on a rectifier.

25. The method of claim 24, wherein the powertrain control module provides electronic notification of the fault condition information.

26. The method of claim 24, wherein the powertrain control module takes corrective action in response to receiving the fault condition information.

27. An engine control system, comprising:
a voltage regulator coupled to an alternator for controlling alternator output;
an engine control module coupled to the voltage regulator and operable to control engine RPM;
an alternator load status signal supplied from the voltage regulator to the engine control module to provide an alternator status to the engine control module; and
an alternator voltage setpoint supplied from the engine control module to the voltage regulator to adjust the alternator output.

28. The system according to claim 26, wherein alternator load status signal is influenced by engine RPM controlled by the engine control module, thereby providing a closed loop control.

29. A voltage regulator for an alternator, comprising:
a control input related to control of alternator output for providing a setpoint for operation of the alternator,
a load indicator output influenced by alternator RPM for providing an alternator load status;
a field drive output coupled to the alternator for driving a field coil of the alternator; and
a regulator control circuit coupled to the control input, the load indicator output and the field drive output for adjusting field drive output based on the setpoint and alternator output and for controlling the load indicator output based on the field drive output

30. The regulator of claim 29 integrated on a single integrated circuit.
